Europäisches Patentamt

European Patent Office

Office européen des brevets

(19)

(11) Veröffentlichungsnummer: **0 250 028 B1**

# (12) EUROPÄISCHE PATENTSCHRIFT

(45) Veröffentlichungstag der Patentschrift: **13.11.91**

(21) Anmeldenummer: **87201096.2**

(22) Anmeldetag: **11.06.87**

(51) Int. Cl.5: **G01L 9/12**, G01D 3/02, G01D 5/24

(54) **Schaltungsanordnung zur Kompensation von temperatur- und nichttemperatur-bedingtem Driften eines kapazitiven Sensors.**

(30) Priorität: **18.06.86 DE 3620399**

(43) Veröffentlichungstag der Anmeldung:
**23.12.87 Patentblatt 87/52**

(45) Bekanntmachung des Hinweises auf die
Patenterteilung:
**13.11.91 Patentblatt 91/46**

(84) Benannte Vertragsstaaten:
**DE FR GB**

(56) Entgegenhaltungen:
**EP-A- 0 141 080**
**DD-A- 119 863**
**DE-A- 3 516 162**
**DE-A- 3 528 416**

**PATENT ABSTRACTS OF JAPAN Band 7,Nr. 15 (P-169) (1160), 21. Januar 1983; & JP-A-57 171 212**

**PATENT ABSTRACTS OF JAPAN Band 9, Nr.62 (P-342)(1785), 19.März 1985; JP-A-59197 818**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

Patentinhaber: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Kordts, Jürgen**
**Pulverstrasse 11**
**W-2000 Wedel(DE)**

PATENT ABSTRACTS OF JAPAN Band 8, Nr.265 (P-318)(1702),5 Dezember 1984; JP-A-59 133 421

(74) Vertreter: Kupfermann, Fritz-Joachim, Dipl.-Ing. et al
Philips Patentverwaltung GmbH Wendenstrasse 35 Postfach 10 51 49
W-2000 Hamburg 1(DE)

## Beschreibung

Die Erfindung bezieht sich auf eine Schaltungsanordnung zur Kompensation von temperaturabhängigem und temperaturunabhängigem Driften und zur Kompensation der Empfindlichkeit eines kapazitiven Sensors mit zwei Meßkondensatoren, dessen Kapazitäten mit wenigstens einem Oszillator verbunden sind, der an den Ausgängen Impulse mit einer zur Kapazität proportionalen Dauer liefert, wobei die von den jeweiligen Kapazitäten herrührenden Impulse jeweils abwechselnd auftreten, mit einer Schaltung zur Erzeugung von Referenzimpulsen aus den von den jeweiligen Kapazitäten herrührenden Impulsen, wobei die Dauer der Referenzimpulse geringer als die Dauer der Impulse der jeweiligen Kapazität ist, mit jeweils einem einer Kapazität zugeordneten Impulsdauerdemodulator, der aus den zugeführten Impulsen ein Gleichsignal entsprechend dem jeweiligen Reziprokwert einer Kapazität erzeugt, indem während einer ersten von der Dauer eines Referenzimpulses abhängigen Zeit $t_{ref}$ ein erstes Bezugssignal aufintegriert und während einer zweiten Zeit nach Beendigung des Referenzimpulses ein zweites Bezugssignal abintegriert wird, und mit einem Ausgangssubtrahierglied, das die Differenz zwischen den beiden Ausgangssignalen der Impulsdauerdemodulatoren bildet.

Eine Auswerteschaltung für einen kapazitiven Sensor dieser Art ist in der deutschen Patentanmeldung P 35 28 416.1 beschrieben, wobei derartige Auswerteschaltungen beispielsweise dazu verwendet werden, den von einem kapazitiven Differenzdruckmesser erfaßten Differenzdruck zu bestimmen, indem die druckbedingten Kapazitätsänderungen zweier im Differenzdrucksensor enthaltener Meßkondensatoren ausgewertet werden. Diese Auswerteschaltung zeigt jedoch ein sensorbedingtes Driften des Nullpunktes und der Empfindlichkeit in Abhängigkeit von der Änderung der Temperatur.

Zwar ist es grundsätzlich bekannt (DE-OS 33 40 834), eine Kompensation von Nullpunkt und Empfindlichkeit bei einem kapazitiven Differenzdrucksensor durchzuführen, wobei dort mit Hilfe von Integratoren die Sensorkapazitäten $C_1$ und $C_2$ in Wechselspannungen umgesetzt werden, bei denen die Amplituden proportional zu $1/C_1$ bzw. $1/C_2$ sind. Bei dieser bekannten Schaltungsanordnung wird durch Summation dieser Wechselspannungen mit einer Referenzwechselspannung, die aus einem weiteren Integrator kommt und durch Rückführung dieses Summensignals auf einen Oszillator gegeben wird, der wiederum die Integratoren ansteuert, die temperaturabhängige Empfindlichkeit des Sensors kompensiert. Durch Summation bzw. Subtraktion der Integratorspannungen läßt sich der Nullpunkt korrigieren. Diese bekannte Schaltungsanordnung funktioniert jedoch nur dann, wenn die Sensorinformation in der Amplitude des elektrischen Signals steckt. Ist aber die Sensorinformation in der Impulsbreite oder der Frequenz kodiert, wie es bei der gattungsgemäßen Auswerteschaltung der Fall ist, so ist diese bekannte Art der Kompensation wegen der völlig unterschiedlichen Arbeitsweise der jeweiligen Schaltungen nicht übertragbar.

Es ist daher Aufgabe der Erfindung, eine Schaltungsanordnung zu schaffen, mit der von einem kapazitiven Differenzdrucksensor gelieferte und geeignet umgewandelte impulsdauermodulierte Signale so in eine Gleichspannung umgesetzt werden können, daß das sensorbedingte Driften kompensiert werden kann.

Gelöst wird die Aufgabe bei einer Schaltungsanordnung der eingangs genannten Art dadurch, daß ein Ausgang der Impulsdauerdemodulatoren jeweils mit einem Eingang eines Summier-/Subtrahiergliedes verbunden ist, dessen Ausgang einem Regler, der das erste Bezugssignal liefert, ein Eingangsgleichsignal zuführt, wobei das Gleichsignal des Reglerausgangs, der mit einem weiteren Eingang des Summier-/Subtrahiergliedes und mit einem weiteren Eingang des Ausgangssubtrahiergliedes verbunden ist, derart nachgeregelt wird, daß das Reglereingangsgleichsignal am Ausgang des Summier-/Subtrahiergliedes gleich einem Referenzsignal ist.

Mit einer Schaltungsanordnung dieser Art ist es möglich, impulsbreitenmodulierte Sensorsignale so in ein Gleichspannungssignal umzusetzen, daß einerseits die temperaturbedingten Fehler des Sensors kompensiert werden können und andererseits eine Linearisierung des differenzdruckabhängigen Ausgangssignals möglich ist.

In einer Fortbildung der Erfindung ist vorgesehen, daß im jeweiligen Eingangskreis der Impulsdauerdemodulatoren ein elektrisch steuerbarer Schließer liegt, der jeweils entsprechend der Impulsdauer der Oszillatorausgangsimpulse vom Regler über eine von der Dauer des Referenzimpulses abhängigen Zeit $t_{ref}$ einen Ladekondensator des Impulsdauerdemodulators die Reglerausgangsgleichspannung zu dessen Aufladung und nach dem Ende der Zeit $t_{ref}$ Nullpotential zu dessen Entladung zuführt.

Vorteilhaft ist es, in der Verbindung zwischen dem Reglerausgang und den Schließern einen elektrisch steuerbaren Umschalter anzuordnen, dessen Ruhekontakt auf Nullpotential liegt und über den mittels eines von den Oszillatoren abgeleiteten Impulssignals die Zeitdauer $t_{ref}$ der Aufladung und die der Entladung des jeweiligen Ladekondensators durch entsprechende Umschaltung bestimmbar ist. Hierbei ist es grundsätzlich möglich, die elektrisch steuerbaren Schließer und Umschalter durch elektronische Schalter zu realisie-

3

EP 0 250 028 B1

ren.

Um für Abgleichzwecke den Regler außer Betrieb setzen zu können, ist dieser mit einem Schalter verbunden, über den der Regler ein- und ausschaltbar ist, womit erreicht werden kann, daß die Ausgangsspannung des Reglers $U_O$ auf einem konstanten Wert gehalten werden kann. Für zwei verschiedene Temperaturen lassen sich somit die Ausgangsspannungen der jeweiligen Impulsdemodulatoren in drucklosem und belastetem Zustand des Sensors messen, so daß die sensorbedingte Temperaturabhängigkeit dieser Ausgangsspannungen aufgenommen werden kann.

Bei einer vorteilhaften Ausgestaltung der Erfindung besitzt der Impulsdauerdemodulator ein den Ladekondensator enthaltendes Tiefpaßfilter aus drei hintereinander geschalteten Filterhalbgliedern, sowie einen Entkoppelverstärker mit hohem Eingangswiderstand, der aus einem nichtinvertierenden Operationsverstärker besteht, wobei durch den hochohmigen Eingangswiderstand vorteilhafterwese bewirkt wird, daß sich der Ladekondensator nicht über den Entkoppelverstärker entladen kann.

Vorteilhaft ist es, daß das Summier-/Subtrahierglied einen Operationsverstärker mit einem nichtinvertierenden und einem invertierenden Eingang, der über einen ersten Widerstand mit Nullpotential verbunden ist, aufweist sowie einen zweiten und einen dritten Widerstand, deren gemeinsam verbundenes Ende den einen Eingang des Summier-/Subtrahiergliedes bildet und deren eines getrennte Ende mit dem nichtinvertierenden Eingang und deren anderes getrennte Ende mit dem invertierenden Eingang des Operationsverstärkers verbunden ist, sowie einen vierten und einen fünften Widerstand, deren gemeinsam verbundenes Ende den anderen Eingang des Summier-/Subtrahiergliedes bildet und deren eines getrennte Ende mit dem nichtinvertierenden Eingang und deren anderes getrennte Ende mit dem nichtinvertierendem Ende des Operationsverstärkers verbunden ist, wobei der Ausgang des Operationsverstärkers den Ausgang des Summier-/Subtrahiergliedes bildet und der nichtinvertierende Eingang des Operationsverstärkers über einen Widerstand mit Nullpotential und dessen invertierender Eingang über einen Widerstand mit dessen Ausgang verbunden ist. Der Vorteil ist, daß durch geeignete Wahl der Widerstandsverhältnisse Konstanten im Summier-/Subtrahierglied einstellbar sind, die dazu dienen, einerseits die temperaturunabhängige Nullpunktverschiebung zu korrigieren, andererseits eine temperaturabhängige Nullpunktverschiebung zur Kompensation eines unerwünschten Driftens zu erzeugen und schließlich die Temperaturempfindlichkeit bestimmungsgemäß zu korrigieren.

Bei einer weiteren vorteilhaften Ausgestaltung der Erfindung umfaßt das Ausgangssubtrahierglied a.) einen Operationsverstärker mit einem nichtinvertierenden und einem invertierenden Eingang, b.) einen ersten und einen zweiten Widerstand, deren gemeinsam verbundenes Ende mit dem nichtinvertierenden Eingang des Operationsverstärkers verbunden ist, wobei das getrennte Ende des ersten Widerstandes einen ersten Eingang und das getrennte Ende des zweiten Widerstandes den weiteren Eingang des Ausgangssubtrahiergliedes bildet, und c.) einen dritten und vierten Widerstand, deren gemeinsam verbundenes Ende mit dem invertierenden Eingang des Operationsverstärkers verbunden ist, wobei das getrennte Ende des dritten Widerstandspaares einen zweiten Eingang und das getrennte Ende des vierten Widerstandes ebenfalls den weiteren Eingang des Ausgangssubtrahiergliedes bildet und ein getrenntes Ende des zweiten bzw. vierten Widerstandes auf vorbestimmte Weise wechselseitig jeweils den weiteren Eingang bildet, während das andere getrennte Ende mit Nullpotential verbunden ist und der nichtinvertierende Eingang des Operationsverstärkers über einen Widerstand mit Nullpotential und dessen invertierender Eingang über einen Widerstand mit dessen Ausgang verbunden sind.

Gemäß einer vorteilhaften Ausgestaltung der Erfindung enthält der Regler einen Operationsverstärker, dessen nichtinvertierender Eingang mit dem Ausgang eines Generators zur Erzeugung der festen Reglereingangsgleichspannung, und dessen invertierender Eingang über einen Eingangswiderstand mit dem Ausgang des Summier-/Subtrahiergliedes, der die andere Reglereingangsgleichspannnung liefert, verbunden ist, wobei der invertierende Eingang des Operationsverstärkers über einen Kondensator mit seinem Ausgang, der den Reglerausgang bildet, verbunden ist.

Schließlich ist es vorteilhaft, daß der Generator zur Erzeugung einer festen Reglereingangsgleichspannung aus einer Zenerdiode und einem dazu parallel geschalteten Kondensator besteht, die mit ihrem einen Pol auf Nullpotential liegen und mit ihrem anderen Pol den Generatorausgang bilden, an dem eine vorbestimmte Gleichspannung aus einer über ein Widerstandselement zugeführten Versorgungsspannung abnehmbar ist. Dieser einfache Schaltungsaufbau zur Erzeugung der festen Reglereingangsgleichspannung kann aber für bestimmte Zwecke durch einen integrierten Spannungsregler ersetzt werden, wenn es auf die Erzeugung einer sehr konstanten Referenzgleichspannung aus einer stark schwankenden Versorgungsspannung ankommt.

Ein Ausführungsbeispiel der Erfindung wird im folgenden anhand der Zeichnung beschrieben. Es zeigen:

Fig. 1 eine Umsetzerschaltung für kapazitive Differenzdrucksensoren,

4

Fig. 2 ein Blockschaltbild der Schaltungsanordnung zur Driftkompensation,
Fig. 3 ein Impulsdiagramm, das die zeitmodulierten Eingangssignale in Relation zu einem aus den Oszillatoren abgeleiteten Steuersignal zeigt, und
Fig. 4 ein vollständiges Schaltbild der Schaltunsanordnung nach Fig. 2.

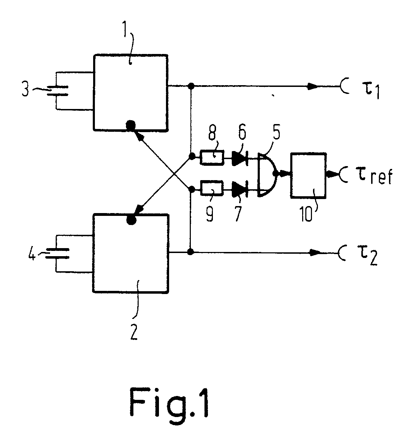

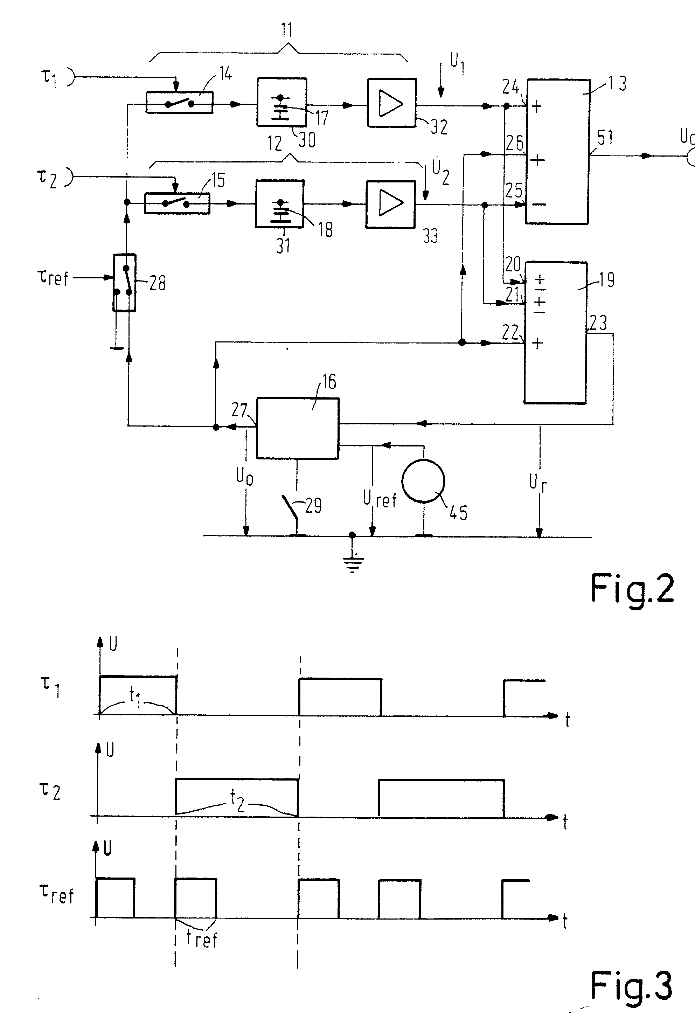

Eine Auswerteschaltung für einen kapazitiven Sensor ist in Fig. 1 gezeigt. Sie enthält einen Oszillator, der aus einer ersten und zweiten monostabilen Kippschaltung 1, 2 besteht. Die Kippschaltungen 1, 2 sind als Ring geschaltet, d.h. der Ausgang einer Kippschaltung ist mit dem invertierenden Eingang der jeweils anderen Kippschaltung verbunden. Mit den Kippschaltungen 1 und 2 ist jeweils ein Meßkondensator 3 bzw. 4 verbunden, so daß die monostabilen Kippschaltungen 1, 2 Impulse mit einer zur Kapazität der Meßkondensatoren 3, 4 proportionalen Dauer liefern. Die monostabilen Kippschaltungen 1, 2 sind zudem ausgangsseitig mit später an Hand der Fig. 2 zu beschreibenden Impulsdauerdemodulatoren 11 und 12 verbunden, die aus den von den Kippschaltungen gelieferten Impulsen Gleichspannungen erzeugen, deren Werte gleich dem reziproken Wert der Dauer der von den Kippschaltungen gelieferten Impulse ist.

Ein NOR-Glied 5 ist an seinen zwei Eingängen über je eine Gleichrichterdiode 6 bzw. 7 und je ein Differenzierglied 8 bzw. 9 mit den Ausgängen der ersten bzw. zweiten monostabilen Kippschaltung 1 bzw. 2 verbunden. Das NOR-Glied 5 ist ausgangsseitig mit dem invertierenden Eingang einer dritten monostabilen Kippschaltung 10 verbunden.

Die Einschaltdauer der monostabilen Kippschaltung 10 ist kürzer als diejenige der monostabilen Kippschalter 1, 2, wobei die Kippschaltung 10 mit der doppelten Frequenz als der von den monostabilen Kippschaltungen 1 und 2 über das NOR-Glied 5 getastet wird; vergleiche Impulsdiagramme in Fig. 3, in der $\tau_1$, $\tau_2$ und $\tau_{ref}$ die Ausgangssignale der Kippschaltungen 1, 2 und 10 darstellen.

Die Breite der Signale $\tau_1$ und $\tau_2$ ist ein Maß für die vom Sensor erfaßte physikalische Größe. Das zusätzlich erzeugte Hilfsignal $\tau_{ref}$ wird benötigt, um mit Hilfe der Impulsdauerdemodulatoren 11, 12 (Fig. 2) entsprechende Gleichspannungen zu erzeugen.

Die Untersetzerschaltung für die kapazitiven Differenzdrucksensoren setzt die impulsbreitenmodulierten Sensorsignale, die proportional zu $C_1$ bzw. $C_2$ sind, in Gleichspannungen um, die proportional zu $1/C_1$ bzw. $1/C_2$ sind. Für den Fall, daß keine Kompensation durchgeführt wird, lautet deren Auswerteformel:

$$U_a \sim 1/C_1 - 1/C_2.$$

Dieses Ausgangssignal weist eine temperaturunabhängige und eine temperaturabhängige Nullpunktsverschiebung auf. Darüber hinaus ist die Empfindlichkeit temperaturabhängig. Um diese Effekte zu beseitigen, wird das nachfolgende Signal zur Auswertung mit herangezogen:

$$U_s \sim 1/C_1 + 1/C_2.$$

Dieses Signal ist unabhängig vom am Sensor wirkenden Differenzdruck, aber stark abhängig von der Temperatur. Zur Korrektur der temperaturabhängigen Nullpunktverschiebung wird das Temperatursignal $U_s$ mit einem konstanten Faktor $K_a$ gewichtet und dann von $U_a$ subtrahiert. $K_a$ wird so gewählt, daß die Drift von $U_a$ und die des Temperatursignals sich gegenseitig aufhebt. Die temperaturunabhängige Nullpunktverschiebung wird durch Subtraktion mit einem konstanten Signal korrigiert. Die temperaturabhängige Empfindlichkeit wird korrigiert, indem das Signal $U_a$ durch das sehr stark von der Temperatur abhängige Signal $U_s$ dividiert wird, wobei $U_s$ durch entsprechende Faktoren noch gewichtet wird. Steigt z.B. der Temperatureinfluß des Signals $U_a$ bei konstantem Differenzdruck an, so steigt das gewichtete, stark temperaturabhängige Signals $U_s$ ebenfalls an. Der Quotient dieser beiden Signale bleibt aber konstant.

Der grundsätzliche Aufbau der Schaltungsanordnung und deren Funktion wird unter Bezugnahme auf das in Fig. 2 dargestellte Blockschaltbild in Verbindung mit dem in Fig. 3 dargestellten Impulsdiagramm beschrieben. Die von dem kapazitiven Differenzdrucksensor nach Fig. 1 kommenden Signale $\tau_1$ und $\tau_2$ sind Rechtecksignale. Die Breiten der Impulse sind dabei proportional zu den Sensorkapazitäten $C_1$ bzw. $C_2$. Darüber hinaus wird von der Fig. 1 gezeigten Schaltung ein Impulssignal $\tau_{ref}$ erzeugt, das eine konstante Impulsdauer $t_{ref}$ aufweist.

Die Schaltungsanordnung weist zwei Impulsdauerdemodulatoren 11, 12 auf, die aus den Impulssignalen Gleichspannungen erzeugen, die dann in einem Ausgangssubtrahierglied 13 voneinander subtrahiert werden. Die Impulsdauerdemodulatoren 11, 12 werden jeweils durch elektrisch steuerbare Schließer 14, 15, Tiefpaßfilter 30, 31 und Entkoppelverstärker 32, 33 gebildet. Beide Impulsdauerdemodulatoren 11, 12 sind vollständig gleich aufgebaut. Die beiden Eingangskontakte der Schließer 14, 15 sind gemeinsam mit einem elektrisch steuerbaren Umschalter 28 verbunden, dessen Ruhekontakt auf Nullpotential liegt, während sein Einschaltkontakt mit dem Ausgang 27 eines Reglers 16 verbunden ist, dessen Funktionsweise später beschrieben wird.

Die Signale $\tau_1$, $\tau_2$ stellen die impulsdauermodulierten Signale entsprechend den Sensorkapazitäten $C_1$ bzw. $C_2$ dar. In der Zeit $t_1$ liegt ein High-Signal am Schließer 14 an. Somit gelangt innerhalb der Zeit $t_{ref}$ die Ausgangsspannung $U_O$ des Reglers 16 über Umschalter 28 und Schließer 14 an das Tiefpaßfilter 30. Nach Ablauf der Zeit $t_{ref}$ schaltet der Schalter 28 um, so daß nun Nullpotential am Eingang des Tiefpaßfilters 30 liegt. Nach Ablauf der Zeit $t_1$ öffnet der Schließer 14, so daß dem in dem Tiefpaßfilter 30 befindlichen Ladekondensator 17 weder Ladung zugeführt werden kann noch von ihm abgeführt wird. In der Zeit $t_1$ wird der Ladekondensator 17 somit während der Zeit $t_{ref}$ geladen und in der verbleibenden Zeit entladen. Die dabei entstehende mittlere Gleichspannung am Kondensator 17 ist:

$$U_1 = (t_{ref}/t_1) \cdot U_O .$$

Für $t_1$ gilt: $t_1 = K' \cdot C_1$ $\qquad$ $K'$ = Umsetzungsfaktor für die vorgeschalteten elektronischen Einrichtungen

$\qquad\qquad\qquad\qquad\qquad\qquad\qquad$ $C_1$ = Sensorkapazität

Somit ist: $U_1 = t_{ref} \cdot 1/(K' \cdot C_1) \cdot U_O .$ $\qquad\qquad$ (1)

Der dem Tiefpaßfilter 30 nachgeschaltete Entkoppelverstärker 32 weist einen sehr hochohmigen Eingangswiderstand auf, so daß sich der Ladekondensator 17 im Tiefpaßfilter 30 nicht über den Entkoppelverstärker 32 entladen kann.

Die Funktionsweise des anderen Impulsdauerdemodulators 12, bestehend aus dem Schließer 15, dem Tiefpaßfilter 31 mit einem Ladekondensator 18 und dem nachgeschalteten Entkoppelverstärker 33, entspricht der des Impulsdauerdemodulators 11. Am Ausgang des Entkoppelverstärkers 33 ergibt sich somit eine entsprechende Gleichspannung wie folgt:

$$U_2 = t_{ref} \cdot 1/(K' \cdot C_2) \cdot U_O. \qquad (2)$$

Die Ausgänge der Impulsdauerdemodulatoren 11, 12, die durch die Ausgänge der Entkoppelverstärker 32, 33 gebildet werden, sind jeweils mit einem Eingang 24, 25 eines Ausgangssubtrahiergliedes 13 verbunden. Darüber hinaus sind beide Ausgänge der Impulsdauerdemodulatoren 11, 12 jeweils mit einem Eingang 20, 21 eines Summier-/Subtrahiergliedes 19 verbunden. Ein dritter Eingang 2b des Ausgangssubtrahiergliedes 13 und ein dritter Eingang des Summier-/Subtrahiergliedes 19 sind mit dem Ausgang 27 des Reglers 16 verbunden.

Grundsätzlich gilt für derartige bekannte Summier-/Subtrahierglieder 19, daß an ihrem Ausgang 23 sich eine Gleichspannung mit:

$$U_r = K_3 \cdot U_0 \pm K_4 U_1 \pm K_5 U_2 \qquad (3)$$

ergibt, wobei $K_3$, $K_4$ und $K_5$ Koeffizienten sind, die mit Hilfe von Widerständen in dem Summier-/Subtrahierglied 19 realisiert werden, was im Zusammenhang mit der weiter unten erfolgenden Beschreibung einer konkreten Schaltungsanordnung noch eingehender dargestellt wird.

Die am Ausgang 23 des Summier-/Subtrahiergliedes 19 erzeugte Spannung $U_r$ wird auf den Regler 16 gegeben, der diese Spannung mit einer festen Referenzspannung $U_{ref}$ vergleicht, die von einem Referenzspannungsgenerator 45 erzeugt wird. Am Ausgang des Reglers 16 liegt die Gleichspannung $U_O$. Durch den Regler 16 wird die Gleichspannung $U_O$ so nachgeregelt, daß $U_r = U_{ref}$ wird. Damit gilt unter Einsatz von (1), (2) und (3):

$$U_{ref} = K_3 U_0 \pm K_4 \cdot t_{ref} \cdot 1/(K' \cdot C_1) \cdot U_0 \pm K_5 \cdot t_{ref} \cdot 1/(K' \cdot C_2) U_0$$

bzw.

$$U_0 = U_{ref} \frac{1}{K_3 \pm K_4 K/C_1 \pm K_5 K/C_2} \qquad (4)$$

$$\text{mit } K = t_{ref}/K' \qquad (5).$$

Das Ausgangssubtrahierglied 13 ist ebenfalls ein Summier-/Subtrahierglied mit einstellbaren Koeffizienten. Das Ausgangssignal $U_a$ am Ausgang 51 des Ausgangssubtrahiergliedes 13 und damit das Ausgangssignal der gesamten Schaltungsanordnung ist dann:

$$U_a = \pm K_0 U_0 + K_1 U_1 - K_2 U_2.$$

Unter Einsetzen von (1), (2), (4) und (5) ergibt sich:

$$U_a = U_{ref} \frac{\pm K_0 + K_1 K/C_1 - K_2 K/C_2}{K_3 \pm K_4 K/C_1 \pm K_5 K/C_2} \qquad (6)$$

$$U_a \sim \Delta P$$

$$
\begin{aligned}
U_{ref} \quad &= \quad \text{Referenzspannung} \\
K \quad &= \quad \text{fester Umsetzungsfaktor für die Sensorkapazitäten} \\
K_0 \text{ bis } K_5 \quad &= \quad \text{elektronisch einstellbare Koeffizienten} \\
\Delta P \quad &= \quad \text{Differenzdruck der Sensoren.}
\end{aligned}
$$

Die Konstanten sind durch Widerstandsverhältnisse in den Summier-/Subtrahiergliedern 13, 19 realisierbar. $K_0$ dient dazu, die temperaturunabhängige Nullpunktverschiebung zu korrigieren. Der Term

$$K_1 K/C_1 - K_2 K/C_2$$

ist in erster Näherung proportional zum am Sensor wirkenden Differenzdruck. Daneben bewirkt dieser Term im allgemeinen eine temperaturabhängige Nullpunktverschiebung, wenn $K_1 = K_2$ ist.

Durch leichte Variation von $K_1$ und $K_2$ wird jedoch eine zusätzliche Temperaturdrift erzeugt, die der unerwünschten Drift so entgegenwirkt, daß insgesamt eine Kompensation erzielt wird. Der Term im Nenner:

$$K_3 \pm K_4 K/C_1 \pm K_5 K/C_2$$

ist ebenfalls leicht temperaturabhängig, wobei zunächst $K_4 = K_5$ sein soll. Durch Verändern von $K_4$ und $K_5$ gegenüber $K_3$ läßt sich die Abhängigkeit einstellen. Damit kann die Temperaturdrift der Empfindlichkeit des Zählers der Gleichung (6) korrigiert werden. Wird z.B. durch Temperaturänderung das "Zählersignal" in der (6) größer, so wird das "Nennersignal" in der (6) im gleichen Verhältnis nachgeregelt. Der Quotient und damit das Ausgangssignal $U_a$ bleibt konstant.

Der Regler 16 weist einen Schalter 29 auf, mit dem der Regler 16 ein- und ausgeschaltet werden kann. Wird der Regler 16 durch Schalter 29 außer Betrieb gesetzt, um die Schaltung abgleichen zu können, bleibt

die Gleichspannung $U_0$ am Reglerausgang 27 auf konstantem Wert. Für zwei verschiedene Temperaturen werden dann die Spannungen $U_1$, $U_2$ im drucklosen und im belasteten Zustand des Sensors gemessen. Die sensorbedingte temperaturabhängige Änderung für die Spannungen $U_1$ und $U_2$ wird aufgenommen. Daraus können dann mit Hilfe eines mathematischen Rechenverfahrens die Konstanten $K_0$ - $K_5$ bestimmt werden. Diese Konstanten werden durch entsprechende Widerstände im Ausgangssubtrahierglied 13 und im Summier-/Subtrahierglied 19 realisiert und sorgen dafür, daß das Ausgangssignal $U_a$, bezogen auf die Temperatur, kompensiert ist.

Neben einer Temperaturkompensation kann mit dieser Schaltungsanordnung auch das Ausgangssignal $U_a$ linearisiert werden. Das Ausgangssignal $U_a$ des Ausgangssubtrahiergliedes 13 weist normalerweise eine geringe nichtlineare Komponente auf, d.h. es ändert sich nicht streng proportional zum am Sensor wirkenden Differenzdruck. Das Ausgangssignal $U_r$ des Summier-/Subtrahiergliedes 19, mit dem die temperaturabhängige Änderung korrigiert wird, ist unabhängig vom Differenzdruck, wenn die beiden Konstanten $K_4$ und $K_5$ gleich groß sind. Die Nichtlinearität des Ausgangssignals $U_r$ ist nun dadurch verringerbar, daß die Konstanten $K_4$ und $K_5$ leicht unterschiedlich engestellt werden. Dadurch erhält das Ausgangssignal $U_r$ des Summier-/Subtrahiergliedes 19 und damit auch das Signal $U_0$ am Ausgang des Reglers 16 eine leichte Differenzdruckabhängigkeit. Steigt nun z.B. das Ausgangssignal $U_a$ des Ausgangssubtrahiergliedes 13 überproportional mit dem Differenzdruck an, wird mit Hilfe der Konstanten $K_4$ und $K_5$ das Signal $U_0$ am Reglerausgang 27 so gestaltet, daß es mit steigendem Differenzdruck entsprechend abfällt. Da das Ausgangssignal $U_a$ des Ausgangssubtrahiergliedes 13 aber direkt abhängig vom Signal $U_0$ am Reglerausgang 27 ist, wird über Rückführung dieses Signal zum Eingang 26 des Ausgangssubtrahiergliedes 13 und zum Eingang 22 des Summier-/Subtrahiergliedes 19 der überproportionale Anstieg korrigiert.

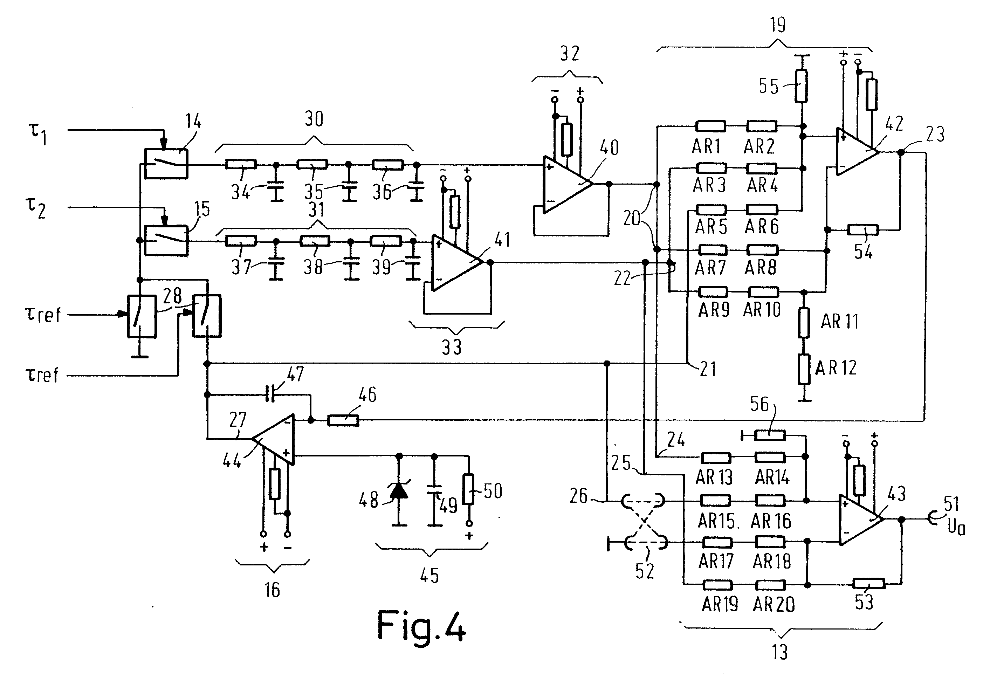

Die in Fig. 2 dargestellte und anhand dieses Blockschaltbildes vorangehend in ihrer Funktionsweise beschriebene Schaltungsanordnung kann im einzelnen einen in Fig. 4 beispielhaft dargestellten Schaltungsaufbau aufweisen. Die Impulsdauerdemodulatoren 11, 12 werden hier wiederum durch einen elektrisch steuerbaren Schließer 14, 15, ein Tiefpaßfilter 30, 31 sowie durch hochohmige Entkoppelverstärker 32, 33 gebildet, die in Reihe geschaltet sind. Die Eingänge der Schließer 14, 15 sind gemeinsam zum Ausgangskontakt des elektrisch steuerbaren Umschalters 28 geführt, der aus zwei gesonderten Schließern besteht, die durch ein Referenzsignal $\tau_{ref}$ bzw. $\overline{\tau_{ref}}$ wechselweise angesteuert werden, so daß dieser Umschalter 28 genau wie der in Fig. 1 dargestellte dreipolige Umschalter 28 wirkt. Die Differenzsignale $\tau_{ref}$ bzw. $\overline{\tau_{ref}}$ werden, wie vorangehend schon erläutert, aus der der erfindungsgemäßen Schaltung vorangehenden Schaltung nach Fig. 1 abgeleitet, die aus den Kapazitätsänderungen der Sensoren zeitmodulierte Signale $\tau_1$ und $\tau_2$ erzeugt.

Diese zeitmodulierten Sensorsignale $\tau_1$ bzw. $\tau_2$ werden den Schließern 14 bzw. 15 zugeführt und bestimmen, wie vorangehend beschrieben, entsprechend der zeitlichen Länge der Sensorsignale die Zeit des Schließens der Schließer 14, 15.

Die Tiefpaßfilter 30, 31 bestehen jeweils aus drei Filterhalbgliedern 34, 35, 36 bzw. 37, 38, 39, die auf bekannte Weise hintereinander geschaltet sind. Jedes einzelne dieser Halbglieder besteht aus einem Widerstand im Längszweig und einem Kondensator, der einseitig auf Nullpotential liegt, im Querzweig.

Die Entkoppelverstärker 32, 33 werden durch Operationsverstärker 40, 41 gebildet, deren nichtinvertierender Eingang mit dem Ausgang der Tiefpaßfilter 30, 31 verbunden ist. Der invertierende Eingang der Entkoppelverstärker 40, 41 ist mit dem Ausgang der Entkoppelverstärker 40, 41 rückgekoppelt verbunden. Im übrigen sind die Operationsverstärker 40, 41 auf bekannte Weise an geeignete Versorgungsspannungsquellen angeschlossen. Die Ausgänge der Entkoppelverstärker 32, 33, die bei dieser Schaltung durch die Ausgänge der Entkoppelverstärker 40, 41 gebildet werden, sind mit dem jeweiligen Eingang 20 bzw. 22 des Summier-/Subtrahiergliedes 19 verbunden. Das Summier-/Subtrahierglied 19 wird durch ein Widerstandsnetzwerk AR 1 - AR 12 gebildet, das mit einem Operationsverstärker 42 verbunden ist. Der nichtinvertierende Eingang des Operationsverstärkers 42, der über einen Widerstand 55 mit Nullpotential verbunden ist, ist über eine Reihenschaltung zweier Widerstände AR 1, AR 2 mit dem Eingang 20 und über eine Reihenschaltung aus den Widerständen AR 3 und AR 4 mit dem Eingang 22 verbunden. Der invertierende Eingang des Operationsverstärkers 42 ist über eine Reihenschaltung aus den Widerständen AR 7, AR 8 mit dem Eingang 20 und über eine Reihenschaltung aus den Widerständen AR 9 und AR 10 mit dem Eingang 22 verbunden. Darüber hinaus ist der invertierende Eingang des Operationsverstärkers 42 über eine Reihenschaltung von Widerständen AR 11 und AR 12 mit Nullpotential verbunden.

Über eine Reihenschaltung aus den Widerständen AR 5 und AR 6 ist der nichtinvertierende Eingang des Operationsverstärkers 42 über den Eingang 21 des Summier-/Subtrahiergliedes 19 mit dem Ausgang 27 des Reglers 16 verbunden, der im vorliegenden Fall im wesentlichen durch einen Operationsverstärker 44 gebildet wird.

Die Ausgänge der Impulsdauermodulatoren 11, 12, d.h. die Ausgänge der Operationsverstärker 40, 41

EP 0 250 028 B1

sind darüber hinaus mit den Eingängen 24, 25 des Ausgangssubtrahiergliedes 13 verbunden. Das Ausgangssubtrahierglied 13 wird durch ein Widerstandsnetzwerk AR 13 - AR 20 und einen Operationsverstärker 43 gebildet. Der nichtinvertierende Eingang des Operationsverstärkers 43, der über einen Widerstand 56 mit Nullpotential verbunden ist, ist über eine Reihenschaltung aus Widerständen AR 13 und AR 14 mit dem Eingang 24 verbunden, während der invertierende Eingang des Operationsverstärkers 43 über eine Reihenschaltung aus Widerständen AR 19 und AR 20 mit dem anderen Eingang 25 des Ausgangssubtrahiergliedes 13 verbunden ist. Der nichtinvertierende Eingang des Operationsverstärkers 43 ist darüber hinaus durch eine Reihenschaltung aus den Widerständen AR 15 und AR 16 über einen Kreuzschalter 52 mit dem weiteren Eingang 26 des Ausgangssubtrahiergliedes 13 verbindbar, ebenso eine Reihenschaltung aus den Widerständen AR 17 und AR 18, die mit dem invertierenden Eingang des Operationsverstärkers 43 verbunden ist. Der Kreuzschalter 52 gestattet es, daß entweder die Reihenschaltung aus den Widerständen AR 15 und AR 16 an Nullpotential gelegt wird, wenn die andere Reihenschaltung aus den Widerständen AR 17 und AR 18 an den Eingang 26 des Ausgangssubtrahiergliedes 13 gelegt ist, oder daß die Reihenschaltung aus den Widerständen AR 17 und AR 18 an Nullpotential gelegt wird, wenn die Reihenschaltung aus den Widerständen AR 15 und AR 16 an den Eingang 26 des Ausgangssubtrahiergliedes 13 gelegt ist. Beide Widerstandsreihenschatungen können somit den Eingang 26 bilden, wobei jeweils die andere Reihenschaltung auf Nullpotential liegt.

Der Ausgang des Operationsverstärkers 43 ist über einen Widerstand 53 mit dem invertierenden Eingang des Operationsverstärkers 43 verbunden. Der Ausgang des Operationsverstärkers 43 bildet auch den Ausgang 51 der gesamten Schaltungsanordnung.

Der Ausgang 23 des Summier-/Subtrahiergliedes 19, der hier durch den Ausgang des Operationsverstärkers 42 gebildet wird, ist mit dem invertierenden Eingang des Operationsverstärkers 42 über einen Widerstand 54 verbunden und darüber hinaus über einen Widerstand 46 mit dem invertierenden Eingang des den Regler 16 im wesentlichen bildenden Operationsverstärkers 44. Der Operationsverstärker 44 arbeitet hier als zwei Eingangsspannungen vergleichender Komparator. Der invertierende Eingang des Operationsverstärkers 44 ist mit dem Ausgang des Operationsverstärkers 44, der den Reglerausgang 27 bildet, über einen Kondensator 47 verbunden. Der nichtinvertierende Eingang des Operationsverstärkers 44 ist mit dem Ausgang eines Referenzspannungsgenerators 45 zur Erzeugung einer festen Referenzspannung verbunden. Der Reglerausgang 27 bzw. der Ausgang des Operationsverstärkers 44 ist mit dem Eingang 26 des Ausgangssubtrahiergliedes 13 und mit dem Eingang 21 des Summier-/Subtrahiergliedes 19 sowie mit dem Einschaltkontakt des Umschalters 28 verbunden. Der Ruhekontakt des Umschalters 28 ist mit Nullpotential verbunden, während der Ausgangskontakt, wie schon erläutert, gemeinsam mit den ersten Schaltkontakten der Schließer 14, 15 verbunden ist.

Der Generator 45 zur Erzeugung einer festen Reglerengangsspannung umfaßt eine Zenerdiode 48 sowie einen Kondensator 49, die jeweils mit ihrer einen Klemme auf Nullpotential liegen und mit ihrer anderen Klemme mit dem nichtinvertierenden Eingang des Operationsverstärkers 44 verbunden sind. Über ein Widerstandselement 50 wird eine Gleichspannung dem Verbindungspunkt zwischen Kondensator 49 und Zenerdiode 48 kathodenseitig zugeführt, so daß am nichtinvertierenden Eingang des Operationsverstärkers 44 eine feste Referenzspannung erzeugt wird.

Mit den Widerständen AR 1 bis AR 12 werden die Konstanten $K_3$, $K_4$ und $K_5$ eingestellt. Bei positiven Vorzeichen von $K_4$ und $K_5$ werden die Widerstände AR 7 bis AR 10 fortgelassen und bei negativen Vorzeichen werden die Widerstände AR 1 bis AR 4 fortgelassen. Am Ausgang 51 des Ausgangssubtrahiergliedes 13 wird somit bestimmungsgemäß eine temperaturkompensierte Ausgangsspannung $U_a$ geliefert.

Mit der beschriebenen Schaltungsanordnung ist es möglich, impulsbreitenmodulierte Sensorsignale so in ein Gleichspannungssignal umzusetzen, daß einerseits die temperaturbedingten Fehler des Sensors kompensiert werden und andererseits auch eine Linearisierung des differenzdruckabhängigen Ausgangssignals bzw. der Ausgangsspannung $U_a$ möglich ist.

**Patentansprüche**

1. Schaltungsanordnung zur Kompensation von temperaturabhängigem und temperaturunabhängigem Driften und zur Kompensation der Empfindlichkeit eines kapazitiven Sensors mit zwei Meßkondensatoren, dessen Kapazitäten von einer zu erfassenden physikalischen Größe abhängen und die mit wenigstens einem Oszillator verbunden sind, der an den Ausgängen Impulse mit einer zur Kapazität proportionalen Dauer liefert, wobei die von den jeweiligen Kapazitäten herrührenden Impulse jeweils abwechselnd auftreten, mit einer Schaltung zur Erzeugung von Referenzimpulsen aus den von den jeweiligen Kapazitäten herrührenden Impulsen, wobei die Dauer der Referenzimpulse geringer als die Dauer der Impulse der jeweiligen Kapazität ist, mit jeweils einem einer Kapazität zugeordneten

9

EP 0 250 028 B1

Impulsdauerdemodulator, der aus den zugeführten Impulsen ein Gleichsignal entsprechend dem jeweiligen Reziprokwert einer Kapazität erzeugt, indem während einer ersten von der Dauer eines Referenzimpulses abhängigen Zeit $t_{ref}$ ein erstes Bezugssignal aufintegriert und während einer zweiten Zeit nach Beendigung des Referenzimpulses ein zweites Bezugssignal abintegriert wird, und mit einem Ausgangssubtrahierglied, das die Differenz zwischen den beiden Ausgangssignalen der Impulsdauerdemodulatoren bildet,
dadurch gekennzeichnet, daß ein Ausgang der Impulsdauerdemodulatoren (11, 12) jeweils mit einem Eingang (20, 21) eines Summier-/Subtrahiergliedes (19) verbunden ist, dessen Ausgang (23) einem Regler, der das erste Bezugssignal liefert, ein Eingangsgleichsignal (Ur) zuführt, wobei das Gleichsignal (UO) des Reglerausgangs (27), der mit einem weiteren Eingang (22) des Summier-/Subtrahiergliedes (19) und mit einem weiteren Eingang (26) des Ausgangssubtrahiergliedes (13) verbunden ist, derart nachgeregelt wird, daß das Reglereingangsgleichsignal (Ur) am Ausgang (23) des Summier-/Subtrahiergliedes (19) gleich einem Referenzsignal (Uref) ist.

2. Schaltungsanordnung nach Anspruch 1,
dadurch gekennzeichnet, daß im jeweiligen Eingangskreis der Impulsdauerdemodulatoren (11, 12) ein elektrisch steuerbarer Schließer (14, 15) liegt, der jeweils entsprechend der Impulsdauer ($t_1$, $t_2$) der Oszillatorausgangsimpulse ($\tau_1$, $\tau_2$) vom Regler über eine von der Dauer des Referenzimpulses abhängigen Zeit $t_{ref}$ einem Ladekondensator (17, 18) des Impulsdauerdemodulators (11, 12) die Reglerausgangsgleichspannung (Uo) zu dessen Aufladung und nach dem Ende der Zeit $t_{ref}$ Nullpotential zu dessen Entladung zuführt.

3. Schaltungsanordnung nach Anspruch 2,
dadurch gekennzeichnet, daß in der Verbindung zwischen dem Reglerausgang (27) und den Schließern (14, 15) ein elektrisch steuerbarer Umschalter (28) angeordnet ist, dessen Ruhekontakt auf Nullpotential liegt und über den mittels eines von den Oszillatoren abgeleiteten Impulssgnals ($U_{ref}$) die Zeitdauer $t_{ref}$ der Aufladung und die der Entladung des jeweiligen Ladekondensators (17, 18) durch entsprechende Umschaltung bestimmbar ist.

4. Schaltungsanordnung nach Anspruch 2 oder 3,
dadurch gekennzeichnet, daß der Regler (16) mit einem Schalter (29) verbunden ist, über den der Regler (16) ein-und ausschaltbar ist.

5. Schaltungsanordnung nach Anspruch 1 bis 4,
dadurch gekennzeichnet, daß der Impulsdauerdemodulator (11, 12) einden Ladekondensator (17, 18) enthaltendes Tiefpaßfilter (30, 31) aus drei hintereinander geschalteten Filterhalbgliedern (34, 35, 36; 37, 38, 39) sowie einen Entkoppelverstärker (32, 33) mit hohem Eingangswiderstand besitzt, der aus einem nichtinvertierenden Operationsverstärker (40, 41) besteht.

6. Schaltungsanordnung nach Anspruch 1 bis 5,
dadurch gekennzeichnet, daß das Summier-/Subtrahierglied (19) einen Operationsverstärker (42) mit einem nichtinvertierenden und einem invertierenden Eingang, der über einen ersten Widerstand (AR 11, AR 12) mit Nullpotential verbunden ist, aufweist sowie einen zweiten und einen dritten Widerstand (AR 1, AR 2; AR 7, AR8), deren gemeinsam verbundenes Ende den einen Eingang (20) des Summier-/Subtrahiergliedes (19) bildet und deren eines getrennte Ende mit dem nichtinvertierenden Eingang und deren anderes getrennte Ende mit dem invertierenden Eingang des Operationsverstärkers (42) verbunden ist, sowie einen vierten und einen fünften Widerstand (AR 3, AR 4; AR 9, AR 10), deren gemeinsam verbundenes Ende den anderen Eingang (21) des Summier-/Subtrahiergliedes (19) bildet und deren eines getrennte Ende mit dem nichtinvertierenden Eingang und deren anderes getrennte Ende mit dem nichtinvertierenden Eingang des Operationsverstärkers (42) verbunden ist, wobei der Ausgang des Operationsverstärkers (42) den Ausgang (23) des Summier-/Subtrahiergliedes bildet und der nichtinvertierende Eingang des Operationsverstärkers (42) über einen Widerstand (55) und dessen invertierender Eingang über einen Widerstand (54) mit dessen Ausgang (23) verbunden sind.

7. Schaltungsanordnung nach Anspruch 1 bis 6,
dadurch gekennzeichnet, daß das Ausgangssubtrahierglied (13) umfaßt:

a) einen Operationsverstärker (43) mit einem nichtinvertierenden und einem invertierenden Eingang,

10

EP 0 250 028 B1

b) einen ersten und zweiten Widerstand (AR 13, AR 14; AR 15, AR 16), deren gemeinsam verbundenes Ende mit dem nichtinvertierenden Eingang des Operationsverstärkers (43) verbunden ist, wobei das getrennte Ende des ersten Widerstandes (AR 13, AR 14) einen ersten Eingang (24) und das getrennte Ende des zweiten Widerstandes (AR 15, AR 16) den weiteren Eingang (26) des Ausgangssubtrahiergliedes (13) bildet, und

c) einen dritten und vierten Widerstand (AR 19, AR 20; AR 17, AR 18), deren gemeinsam verbundenes Ende mit dem invertierenden Eingang des Operationsverstärkers (43) verbunden ist,

wobei das getrennte Ende des dritten Widerstandes (AR 19, AR 20) einen zweiten Eingang (25) und das getrennte Ende des vierten Widerstandes (AR 17, AR 18) ebenfalls den weiteren Eingang (26) des Ausgangssubtrahiergliedes (13) bilden und ein getrenntes Ende des zweiten bzw. vierten Widerstandes (AR 15, AR 16; AR 17, AR 18) wechselseitig jeweils den weiteren Eingang (26) bildet, während das andere getrennte Ende mit Nullpotential verbunden ist und der nichtinvertierende Eingang des Operationsverstärkers (43) über einen Widerstand (56) mit Nullpotential und dessen invertierender Eingang über einen Widerstand (53) mit dessen Ausgang verbunden sind.

8.  Schaltungsanordnung nach Anspruch 1 bis 7,
dadurch gekennzeichnet, daß der Regler (16) einen als Komparator betriebenen Operationsverstärker (44) enthält, dessen nichtinvertierender Eingang mit dem Ausgang eines Generators (45) zur Erzeugung einer festen Reglereingangsgleichspannung ($U_{ref}$) und dessen invertierender Eingang über einen Eingangswiderstand (46) mit dem Ausgang (23) des Summier-/Subtrahiergliedes (19), der die andere Reglereingangsgleichspannung ($U_r$) liefert, verbunden ist, wobei der invertierende Eingang des Operationsverstärkers (44) über einen Kondensator (47) mit seinem Ausgang, der den Reglerausgang (27) bildet, verbunden ist.

9.  Schaltungsanordnung nach Anspruch 8,
dadurch gekennzeichnet, daß der Generator (45) zur Erzeugung einer festen Reglereingangsgleichspannung ($U_{ref}$) aus einer Zenerdiode (48) und einem dazu parallel geschalteten Kondensator (49) besteht, die mit ihrem einen Pol auf Nullpotential liegen und mit ihrem anderen Pol den Generatorausgang bilden, an dem eine vorbestimmte feste Gleichspannung ($U_{ref}$) aus einer über ein Widerstandselement (50) zugeführten Versorgungsspannung abnehmbar ist.

**Claims**

1.  A circuit arrangement for the compensation of temperature-dependent and temperature-independent drift and for the compensation of the sensitivity of a capacitive sensor, comprising two measuring capacitors, whose capacitances are dependent on a physical quantity to be detected and are connected to at least one oscillator which output pulses having a duration which is proportional to the capacitance, the pulses arising from the respective capacitances appearing in an alternating fashion, comprising a circuit for generating reference pulses from the pulses arising from the respective capacitances, the duration of the reference pulses being shorter than the duration of the pulses from the respective capacitances, comprising a pulse duration demodulator which is associated with a respective capacitance and which forms, from the pulses applied, a d.c. signal which corresponds to the relevant reciprocal value of a capacitance in that during a first period $t_{ref}$ which depends on the duration of a reference pulse a first reference signal is up-slope integrated and during a second period, after expiration of the reference pulse, a second reference signal is down-slope integrated, and also comprising an output subtraction member which forms the difference between the two output signals of the pulse duration demodulators,
characterized in that one output of the pulse duration demodulators (11, 12) is connected to a respective input (20, 21) of a summing/subtraction member (19) whose output (23) supplies a controller, supplying the first reference signal, with an input d.c. signal (Ur), the d.c. signal (UO) of the controller output (27), being connected to a further input (22) of the summing/subtraction member (19) and to a further input (26) of the output subtraction member (13), being re-adjusted so that the controller input d.c. signal (Ur) on the output (23) of the summing/subtraction member (19) is equal to a reference signal (Uref).

2.  A circuit arrangement as claimed in Claim 1,
characterized in that the input circuit of the pulse duration demodulators (11, 12) includes a respective electrically controllable switch (14, 15) which supplies, each time in accordance with the pulse duration

11

($t_1$, $t_2$) of the oscillator output pulses ($\tau_1$, $\tau_2$), a charging capacitor (17, 18) of the pulse duration demodulator (11, 12) with the controller output d.c. voltage (Uo) in order to charge this capacitor during a period $t_{ref}$ which depends on the duration of the reference pulse, and which applies zero potential thereto, after expiration of the period $t_{ref}$, in order to discharge this capacitor.

3. A circuit arrangement as claimed in Claim 2,
characterized in that in the connection between the controller output (27) and the switches (14, 15) there is arranged an electrically controllable switch (28) whose rest contact carries zero potential and by means of which, using a pulse signal ($U_{ref}$) derived from the oscillators, the duration $t_{ref}$ of the charging and the duration of the discharging of the relevant charging capacitor (17, 18) can be determined by appropriate switching over.

4. A circuit arrangement as claimed in Claim 2 or 3,
characterized in that the controller (16) is connected to a switch (29) via which the controller (16) can be switched on and off.

5. A circuit arrangement as claimed in the Claims 1 to 4,
characterized in that the pulse duration demodulator (11, 12) comprises a low-pass filter (30, 31) which includes the charging capacitor (17, 18) and which consists of three successively connected filter elements (34, 35, 36; 37, 38, 39) as well as an uncoupling amplifier (32, 33) which has a high input resistance and which consists of a non-inverting operational amplifier (40, 41).

6. A circuit arrangement as claimed in the Claims 1 to 5,
characterized in that the summing/subtraction member (19) comprises an operational amplifier (42) which has a non-inverting input and an inverting input which is connected to zero potential via a first resistor (AR 11, AR 12), and also comprises a second resistor and a third resistor (AR 1, AR 2; AR 7, AR 8) whose interconnected ends form one input (20) of the summing/subtraction member (19), one of the separate ends thereof being connected to the non-inverting input whilst the other separate end is connected to the inverting input of the operational amplifier (42), as well as a fourth resistor and a fifth resistor (AR 3, AR 4; AR 9, AR 10) whose interconnected ends form the other input (21) of the summing/subtraction member (19), one of the separate ends thereof being connected to the non-inverting input whilst the other separate end is connected to the inverting input of the operational amplifier (42), the output of the operational amplifier (42) forming the output (23) of the summing/subtraction member, the non-inverting input of the operational amplifier (42) being connected to zero potential via a resistor (55) whilst its inverting input is connected to its output (23) via a resistor (54).

7. A circuit arrangement as claimed in the Claims 1 to 6,
characterized in that the output subtraction member (13) comprises:
a) an operational amplifier (43) having a non-inverting input and an inverting input,
b) a first resistor and a second resistor (AR 13, AR 14; AR 15, AR 16) whose interconnected ends are connected to the non-inverting input of the operational amplifier (43), the separate end of the first resistor (AR 13, AR 14) forming a first input (24) and the separate end of the second resistor (AR 15, AR 16) forming the further input (26) of the output subtraction member (13), and
c) a third resistor and a fourth resistor (AR 19, AR 20; AR 17, AR 18) whose interconnected ends are connected to the inverting input of the operational amplifier (43),
the separate end of the third resistor (AR 19, AR 20) forming a second input (25) whilst the separate end of the fourth resistor (AR 17, AR 18) also forms the further input (26) of the output subtraction member (13), a separate end of the second resistor and the fourth resistor (AR 15, AR 16; AR 17, AR 18) reciprocally forming the respective further input (26), the other separate end being connected to zero potential, the non-inverting input of the operational amplifier (43) being connected to zero potential via a resistor (56) whilst its inverting input is connected to its output via a resistor (53).

8. A circuit arrangement as claimed in the Claims 1 to 7,
characterized in that the controller (16) includes an operational amplifier (44) which operates as a comparator and whose non-inverting input is connected to the output of a generator (45) for generating a fixed controller input d.c. voltage ($U_{ref}$), its inverting input being connected, via an input resistor (46), to the output (23) of the summing/subtraction member (19) which supplies the other controller input d.c.

EP 0 250 028 B1

voltage (U$_r$), the inverting input of the operational amplifier (44) being connected, via a capacitor (47), to its output which forms the controller output (27).

9. A circuit arrangement as claimed in Claim 8, characterized in that the generator (45) for generating a fixed controller input d.c. voltage (U$_{ref}$) consists of a zener diode (48) and a capacitor (49) which is connected parallel thereto, one pole thereof carrying zero potential whilst their other pole forms the generator output wherefrom a predetermined fixed d.c. voltage (U$_{ref}$) can be derived from a supply voltage applied via a resistor element (50).

**Revendications**

1. Montage de circuit pour compenser des dérives qui dépendent de la température et des dérives qui n'en dépendent pas et pour compenser la sensibilité d'un capteur capacitif comportant deux condensateurs de mesure, dont les capacités dépendent d'une grandeur physique à capter et qui sont connectés à au moins un oscillateur qui, sur ses sorties, fournit des impulsions d'une durée proportionnelle à la capacité, des impulsions provenant des capacités respectives apparaissant chaque fois en alternance, comportant un circuit destiné à produire des impulsions de référence à partir des impulsions provenant des capacités respectives, la durée des impulsions de référence étant inférieure à celle des impulsions de la capacité respective, comportant un démodulateur d'impulsions en durée associé chaque fois à une capacité qui, à partir des impulsions qui lui sont fournies, produit un signal d'égalité en fonction de la valeur réciproque respective d'une capacité, par le fait que pendant un premier temps t$_{ref}$ dépendant de la durée d'une impulsion de référence, un premier signal de référence est intégré et, pendant un second temps au terme de l'impulsion de référence, un second signal de référence est intégré inversement, et comportant un élément soustracteur de sortie qui forme la différence entre les deux signaux de sortie des démodulateurs d'impulsions en durée, caractérisé en ce qu'une sortie des démodulateurs d'impulsions en durée (11, 12) est chaque fois connectée à une entrée (20, 21) d'un élément sommateur/soustracteur (19) dont la sortie (23) applique un signal d'égalité d'entrée (U$_r$) à un régulateur qui fournit le premier signal de référence, le signal d'égalité (U$_0$) de la sortie (27) du régulateur, qui est connectée à une autre entrée (22) de l'élément sommateur/soustracteur (19) et à une autre entrée (26) de l'élément soustracteur de sortie (13), étant soumis à un réajustement tel que le signal d'égalité d'entrée de régulateur (U$_r$) est égal à un signal de référence (U$_{ref}$) à la sortie (23) de l'élément sommateur/soustracteur (19).

2. Montage de circuit suivant la revendication 1, caractérisé en ce que, dans le circuit d'entrée de chacun des démodulateurs d'impulsions en durée (11, 12) est prévu un contacteur commandé électriquement (14, 15) qui, chaque fois en fonction de la durée d'impulsions (t$_1$, t$_2$) des impulsions de sortie ($\tau_1$, $\tau_2$) de l'oscillateur, applique, à partir du régulateur, pendant un temps t$_{ref}$ dépendant de la durée de l'impulsion de référence, à un condensateur de charge (17, 18) du démodulateur d'impulsions en durée (11, 12) la tension continue de sortie de régulateur (U$_0$) en vue de le charger et au terme du temps t$_{ref}$, le potentiel zéro en vue de le décharger.

3. Montage de circuit suivant la revendication 2, caractérisé en ce que dans la liaison entre la sortie (27) du régulateur et les contacteurs (14, 15) est installé un commutateur commandé électriquement (28) dont le contact de repos est au potentiel zéro et, par l'intermédiaire duquel, au moyen d'un signal d'impulsion (U$_{ref}$) dérivé d'un des oscillateurs, la durée t$_{ref}$ de la charge et celle de la décharge du condensateur de charge (17, 18) en question peut être déterminée par une commutation correspondante.

4. Montage de circuit suivant la revendication 2 ou 3, caractérisé en ce que le régulateur (16) est connecté à un interrupteur (29) par l'intermédiaire duquel ce régulateur (16) peut être mis en circuit et hors circuit.

5. Montage de circuit suivant les revendications 1 à 4, caractérisé en ce que le modulateur d'impulsions en durée (11, 12) possède un filtre passe-bas (30, 31) contenant le condensateur de charge (17, 18) et formé de trois demi-éléments de filtrage (34, 35, 36; 37, 38, 39) connectés en succession, ainsi qu'un amplificateur de découplage (32, 33) à haute résistance d'entrée qui est constitué d'un amplificateur opérationnel non inverseur (40, 41).

13

6. Montage de circuit suivant les revendications 1 à 5, caractérisé en ce que l'élément sommateur/soustracteur (19) comprend un amplificateur opérationnel (42) comportant une entrée non inverseuse et une entrée inverseuse qui est connectée, par l'intermédiaire d'une première résistance (AR11, AR12), au potentiel zéro, ainsi qu'une deuxième et une troisième résistance (AR1, AR2; AR7, AR8), dont l'extrémité connectée en commun forme l'une des entrées (20) de l'élément sommateur/soustracteur (19) et dont une extrémité séparée est connectée à l'entrée non inverseuse et dont l'autre entrée séparée est connectée à l'entrée inverseuse de l'amplificateur opérationnel (42), ainsi qu'une quatrième et une cinquième résistance (AR3, AR4; AR9, AR10), dont l'extrémité connectée en commun forme l'autre entrée (22) de l'élément sommateur/soustracteur (19) et dont l'une des extrémités séparées est connectée à l'entrée non inverseuse et dont l'autre extrémité séparée est connectée à l'entrée inverseuse de l'amplificateur opérationnel (42), la sortie de l'amplificateur opérationnel (42) formant la sortie (23) de l'élément sommateur/soustracteur, tandis que l'entrée non inverseuse de l'amplificateur opérationnel (42) est connectée, par l'intermédiaire d'une résistance (55), au potentiel zéro et son entrée inverseuse, par l'intermédiaire d'une résistance (54), à sa sortie (23).

7. Montage de circuit suivant les revendications 1 à 6, caractérisé en ce que l'élément soustracteur de sortie (13) comprend :

   a) un amplificateur opérationnel (43) comportant une entrée non inverseuse et une entrée inverseuse;

   b) une première et une deuxième résistance (AR13, AR14; AR15, AR16), dont l'extrémité connectée en commun est connectée à l'entrée non inverseuse de l'amplificateur opérationnel (43), l'extrémité séparée de la première résistance (AR13, AR14) formant une première entrée (24) et l'extrémité séparée de la deuxième résistance (AR15, AR16) formant l'autre entrée (26) de l'élément soustracteur de sortie (13), et

   c) une troisième et une quatrième résistance (AR19, AR20; AR17, AR18), dont l'extrémité connectée en commun est connectée à l'entrée inverseuse de l'amplificateur opérationnel (43), l'extrémité séparée de la troisième résistance (AR19, AR20) formant une seconde entrée (25) et l'extrémité séparée de la quatrième résistance (AR17, AR18) formant également l'autre entrée (26) de l'élément soustracteur de sortie (13) et une extrémité séparée de la deuxième ou de la quatrième résistance (AR15, AR16; AR17, AR18) formant en alternance chaque fois l'autre entrée (26), tandis que l'autre extrémité séparée est connectée au potentiel zéro et que l'entrée non inverseuse de l'amplificateur opérationnel (43) est connectée, par l'intermédiaire d'une résistance (56), au potentiel zéro et son entrée inverseuse, par l'intermédiaire d'une résistance (53), à sa sortie.

8. Montage de circuit suivant les revendications 1 à 7, caractérisé en ce que le régulateur (16) contient un amplificateur opérationnel (44) mis en oeuvre comme comparateur, dont l'entrée non inverseuse est connectée à la sortie d'un générateur (45) destiné à produire une tension continue d'entrée de régulateur fixe ($U_{ref}$) et dont l'entrée inverseuse est connectée, par l'intermédiaire d'une résistance d'entrée (46), à la sortie (23) de l'élément sommateur/soustracteur (19), qui fournit l'autre tension continue d'entrée de régulateur ($U_r$), l'entrée inverseuse de l'amplificateur opérationnel (44) étant connectée, par l'intermédiaire d'un condensateur (47), à sa sortie qui forme la sortie (27) du régulateur.

9. Montage de circuit suivant la revendication 8, caractérisé en ce que le générateur (45) destiné à produire une tension continue d'entrée de régulateur fixe ($U_{ref}$) est formé d'une diode Zener (48) et d'un condensateur (49) qui y est connecté en parallèle, ces éléments étant connectés, par l'un des pôles, au potentiel zéro et formant, par leur autre pôle, la sortie du générateur à laquelle une tension continue fixe prédéterminée ($U_{ref}$) provenant d'une tension d'alimentation appliquée par l'intermédiaire d'un élément formant résistance (50) peut être obtenue.

Fig.1

Fig.2

Fig.3

Fig.4